# EUROPEAN PATENT APPLICATION

(11) **EP 2 273 234 A2**
(43) Date of publication of application: **12.01.2011**
(21) Application number: 10165469.7
(22) Date of filing: 10.06.2010
(51) Int. Cl.: G01C 21/36, G06F 3/048

(54) **Location search device, location search method, and computer-readable storage medium storing location search program**

(30) Priority: 10.07.2009 JP 2009163273
(71) Applicant: AISIN AW CO., LTD., Anjo-shi, Aichi 444-1192 (JP)
(72) Inventor: Kawauchi, Hiroshi, Anjo-shi Aichi 444-1192 (JP)
(74) Representative: TBK-Patent

(57) **Abstract**

A location search device including: an input portion that inputs a search term; a storage portion that stores keywords and attributes in association with one another; an attribute acquisition portion that acquires an attribute of an input keyword that is a part of or all of a character string that constitutes an input search term that is the search term input by the input portion, from the storage portion; a search function setting portion that selects a first search function for searching for location information on a location corresponding to the input search term, from among a plurality of search functions, based on the attribute of the input keyword; a search portion that searches for the location information on the location corresponding to the input search term, using the first search function; and a display control portion that performs control such that the location information is displayed.

## Description

### INCORPORATION BY REFERENCE

The disclosure of Japanese Patent Application No. 2009-163273 filed on July 10, 2009 including the specification, drawings and abstract is incorporated herein by reference in its entirety.

### BACKGROUND OF THE INVENTION

### 1. Field of the Invention

The present invention relates to a location search device, a location search method, and a computer-readable storage medium that stores a location search program that display location information based on a search term that is input.

### 2. Description of the Related Art

Various types of proposals are known to have been made that pertain to a technology that displays a list of location information based on a search term that is input. For example, a vehicle display system is known in which a destination setting screen is displayed on a liquid crystal display when a destination setting button is pressed (for example, Japanese Patent Application Publication No. JP-A-2007-309844 (paragraphs 0013 to 0048, FIGS. 1 to 4)). The destination setting screen includes an alphabetic character button (a name button) for transitioning to a screen that allows a destination to be input by inputting alphabetic characters, a facilities button for transitioning to a screen that allows a destination to be selected based on a category such as "parking lot", "park", or the like, an address button for transitioning to a screen that allows a destination to be selected based on an address, a telephone number button for transitioning to a screen that allows a destination to be selected based on a telephone number, a postal code button for transitioning to a screen that allows a destination to be selected based on a postal code, and a history button (a location memory button) for transitioning to a screen that allows a destination to be selected based on a history of destinations that have been selected in the past.

### SUMMARY OF THE INVENTION

According to the vehicle display system that is described in the aforementioned Japanese Patent Application Publication No. JP-A-2007-309844, a user needs to decide on a search function to use so as to select a button that is displayed on the destination setting screen based on the type of destination (facility, location, or the like) or on information of the destination that the user has (a genre, a telephone number, or the like). The destination search operation is therefore cumbersome. Moreover, in a case where the button that is pressed on the destination setting screen is inappropriate, it is not possible to search for and display a list of appropriate destinations.

The present invention provides a location search device, a location search method, and a program that are capable of automatically setting a search function that searches for a destination, based on a search term that is input, to search for appropriate destinations and display them in list form.

A first aspect of the present invention relates to a location search device including: an input portion that inputs a search term; a storage portion that stores keywords and attributes of the keywords in association with one another; an attribute acquisition portion that acquires an attribute of an input keyword that is a part of or all of a character string that constitutes an input search term that is the search term input by the input portion, from the storage portion; a search function setting portion that selects a first search function for searching for location information on a location corresponding to the input search term, from among a plurality of search functions for searching for location information, based on the attribute of the input keyword; a search portion that searches for the location information on the location corresponding to the input search term, using the first search function; and a display control portion that performs control such that the location information is displayed.

A second aspect of the present invention relates to a location search method, including: inputting a search term; acquiring an attribute of an input keyword that is a part of or all of a character string that constitutes an input search term that is the search term input, from the storage portion, from a storage portion that stores keywords and attributes of the keywords in association with one another; selecting a first search function for searching for location information on a location corresponding to the input search term, from among a plurality of search functions for searching for location information, based on the attribute of the input keyword; searching for the location information on the location corresponding to the input search term, using the first search function; and performing control such that the location information is displayed.

A third aspect of the invention relates to a computer-readable medium that stores a computer-executable location search program that causes a computer to perform the location search method according to the second aspect of the invention.

The location search device according to the first aspect of the present invention is capable of acquiring the attribute of the keyword (the input keyword) that is a part of or all of the character string that constitutes the search term (the input search term) that has been input through the input portion, based on the attributes (for example, "genre", "address", and the like) that are stored in association with the keywords in advance, and automatically selecting the search function (the first search function) that is used for searching for the location information on the location corresponding to the input search term, from among the plurality of the search functions, based on the attribute of the input keyword. Then, the location search device is capable of displaying the location information that is found by the first search function. This makes it possible for the user to acquire the appropriate location information, just by inputting the search term using alphabetic character keys or the like.

The location search method according to the second aspect of the present invention is capable of acquiring the attribute of the keyword (the input keyword) that is a part of or all of the character string that constitutes the search term (the input search term) that has been input, based on the attributes (for example, "genre", "address", and the like) that are stored in association with the keywords in advance, and automatically selecting the search function (the first search function) that is used for searching for the location information on the location corresponding to the search term, from among the plurality of the search functions, based on the attribute of the input keyword. Then, the location search method is capable of displaying the location information that is found by the first search function. This makes it possible for the user to acquire the appropriate location information, just by inputting the search term using alphabetic character keys or the like.

The location search program that is stored in the computer-readable medium according to the second aspect of the present invention is capable of acquiring the attribute of the keyword (the input keyword) that is a part of or all of the character string that constitutes the search term (the input search term) that has been input, based on the attributes (for example, "genre", "address", and the like) that are stored in association with the keywords in advance, and automatically selecting the search function (the first search function) that is used for searching for the location information on the location corresponding to the search term, from among the plurality of the search functions, based on the attribute of the input keyword. Then, the location search program is capable of displaying the location information that is found by the first search function. This makes it possible for the user to acquire the appropriate location information, just by inputting the search term using alphabetic character keys or the like.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG. 1 is a block diagram that shows a navigation device according to an embodiment;
FIG. 2 is a figure that shows an example of a genre keyword table that is stored in a keyword database;
FIG. 3 is a figure that shows an example of an address keyword table that is stored in the keyword database;
FIG. 4 is a figure that shows an example of a genre data file that is stored in the keyword database;
FIG. 5 is a flowchart that shows location information display processing that searches for location information, based on a keyword attribute included in a search term that is input, and displays a list of the location information;
FIG. 6 is a sub-flowchart that shows sub-processing of keyword attribute acquisition processing in FIG. 5;
FIG. 7 is a sub-flowchart that shows sub-processing of name search processing in FIG. 5;
FIG. 8 is a figure that shows an example of a search term input screen for inputting the search term;
FIG. 9 is a figure that shows an example of a search results display screen that displays a list of search results;
FIG. 10 is a figure that shows an example of the search results display screen that is the search results display screen shown in FIG. 9 after being scrolled down;
FIG. 11 is a figure that shows an example of a keyword table that is stored in keyword database according to another embodiment; and
FIG. 12 is a sub-flowchart that shows sub-processing that is keyword attribute acquisition processing 2 according to the other embodiment.

### DETAILED DESCRIPTION OF THE EMBODIMENTS

Hereinafter, a location search device, a location search method, and a program according to the present invention will be explained in detail with reference to the drawings, based on an embodiment that is incorporated into a navigation device.

### Overall configuration of navigation device

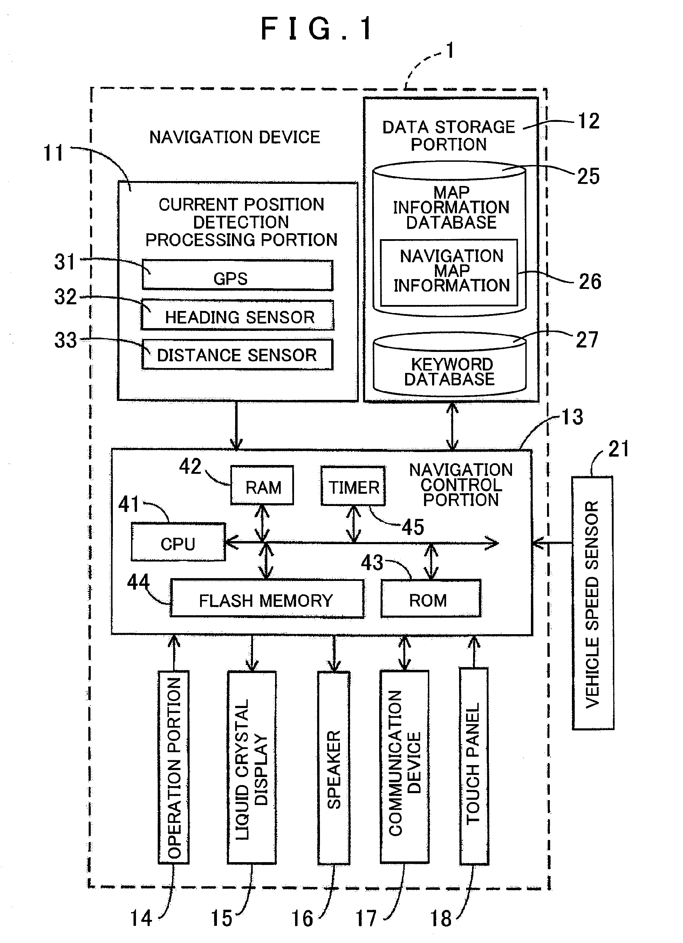

First, an overall configuration of a navigation device according to the present embodiment will be explained based on FIG. 1. FIG. 1 is a block diagram that shows a navigation device 1 according to the present embodiment. As shown in FIG. 1, a navigation device 1 according to the present embodiment is configured from a current position detection processing portion 11, a data storage portion 12, a navigation control portion 13, an operation portion 14, a liquid crystal display 15, a speaker 16, a communication device 17, and a touch panel 18. The current position detection processing portion 11 detects a current position (hereinafter called the vehicle position) of a vehicle in which the navigation device 1 is installed. The data storage portion 12 stores various types of data. The navigation control portion 13 performs various types of computational processing based on information that is input. The operation portion 14 accepts operations by an operator. The liquid crystal display 15 displays information such as a map and the like to the operator. The speaker 16 outputs voice guidance that pertains to route guidance and the like. The communication device 17 performs communication, through a mobile telephone network or the like, with a road traffic information center, a map information distribution center, and the like, which are not shown in the drawings. The touch panel 18 is mounted on the surface of the liquid crystal display 15. In addition, a vehicle speed sensor 21 that detects the speed of the vehicle is connected to the navigation control portion 13.

Hereinafter, the respective structural elements that configure the navigation device 1 will be explained. The current position detection processing portion 11 is configured from a GPS 31, a heading sensor 32, a distance sensor 33, and the like. The current position detection processing portion 11 can detect the vehicle position, the vehicle heading, which indicates the direction in which the vehicle travels, the distance the vehicle has traveled, and the like.

The data storage portion 12 is provided with a hard disk (not shown in the drawings) that is an external storage device and a storage medium, as well as with a readwrite head (not shown in the drawings) for reading a map information database (a map information DB) 25, a keyword database (a keyword DB) 27, a specific program, and the like that are stored on the hard disk, and for writing specific data to the hard disk.

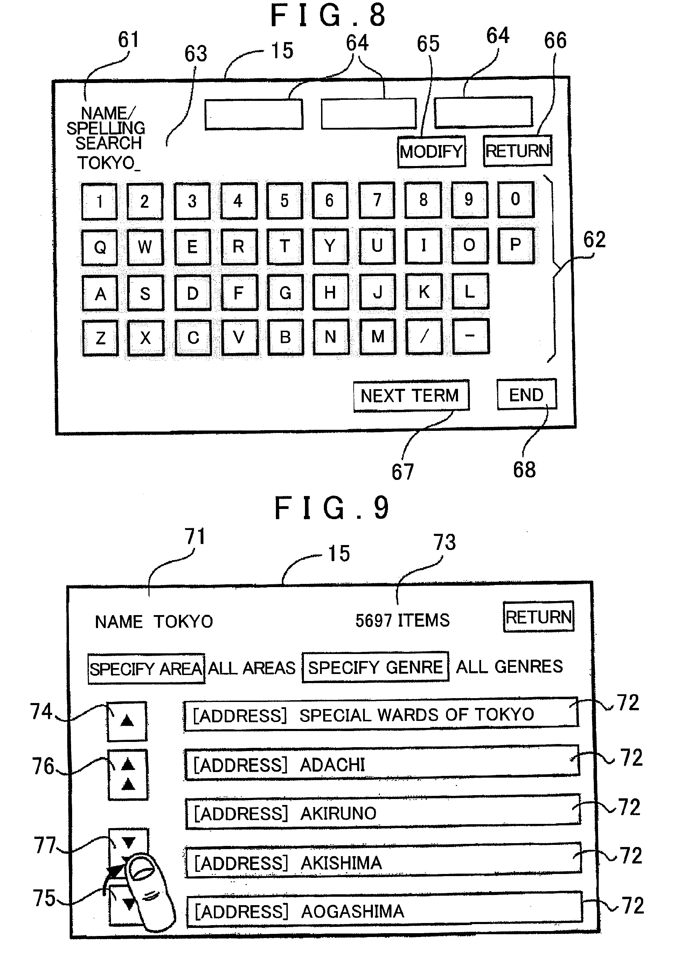

Further, navigation map information 26 that is used for driving guidance and route searching by the navigation device 1 is stored in the map information DB 25. In the present embodiment, the navigation map information 26 is configured from various types of information that are necessary for route guidance and map displaying. The navigation map information 26 may include, for example, newly built road information for specifying respective newly built roads, map display data for displaying maps, intersection data that pertain to respective intersections, node data that pertain to node points, link data that pertain to roads (links) that are one of facility, search data for searching for a route, POI data that pertain to points of interest (POIs) for facilities such as stores, data for searching for a location, and the like. The POI data include data that pertain to POIs for stores, hotels, hospitals, gasoline stations, parking lots, train stations, airports, ferry terminals, and the like in various areas, and they are stored together with IDs for specifying the POIs. The data that pertain to the POIs include names, addresses, telephone numbers, display priority values, and the like. The display priority values are for displaying search results in list form on a search results display screen 71 that will be described later (refer to FIG. 9).

Note that the display priority values are indicated as numerical values, such as 88 or 256, with a higher numerical value indicating a higher priority. The contents of the map information DB 25 are updated by downloading, through the communication device 17, update information that is distributed from the map information distribution center that is not shown in the drawings.

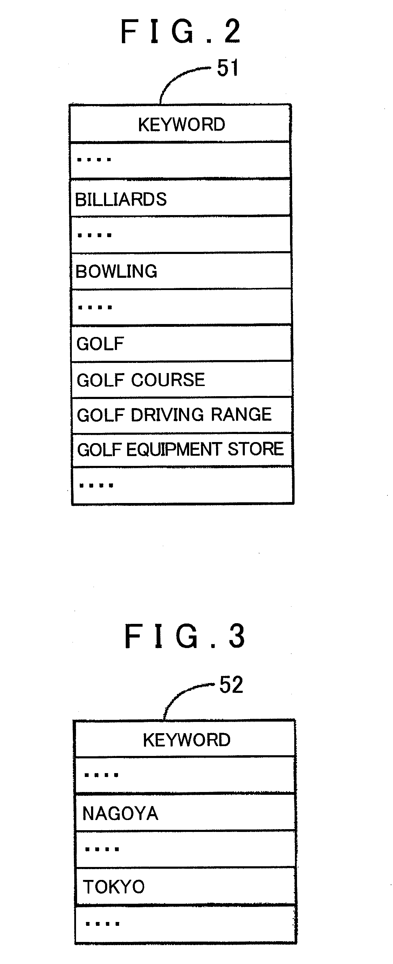

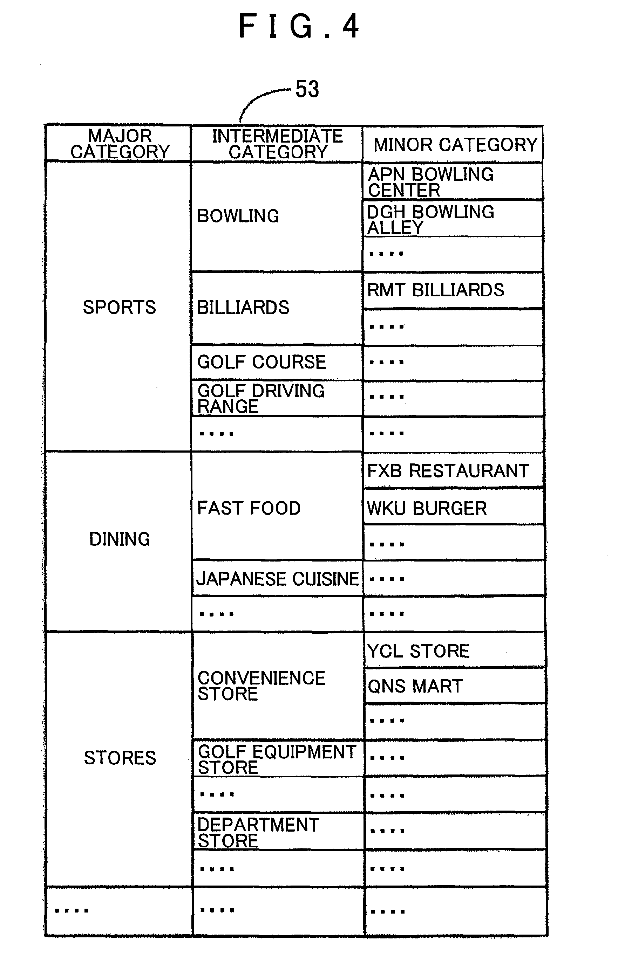

The keyword DB 27 contains a genre keyword table 51 (refer to FIG. 2) and an address keyword table 52 (refer to FIG. 3), which will be described later. Note that one of three attributes, "name", "genre", and "address", is set for each keyword. The genre keyword table 51 contains the keywords for which the attribute is "genre", and the address keyword table 52 contains the keywords for which the attribute is "address". The keyword DB 27 also contains a genre data file 53 (refer to FIG. 4) that stores facility names, which are one of location information that will be described later, the names being stored separately by genre in a hierarchical structure with a plurality of levels.

As also shown in FIG. 1, the navigation control portion 13 that is a configuring element of the navigation device 1 is provided with a CPU 41, a RAM 42, a ROM 43, an internal storage device such as a flash memory 44 or the like, a timer 45, and the like. The CPU 41 serves as a computing device and a control device, and it performs overall control of the navigation device 1. The RAM 42 is used as a working memory when the CPU 41 performs various types of computational processing, and it also stores route data and the like when a search for a route is conducted. A control program is stored in the ROM 43. The flash memory 44 or the like stores a program that is read from the ROM 43. The timer 45 measures time.

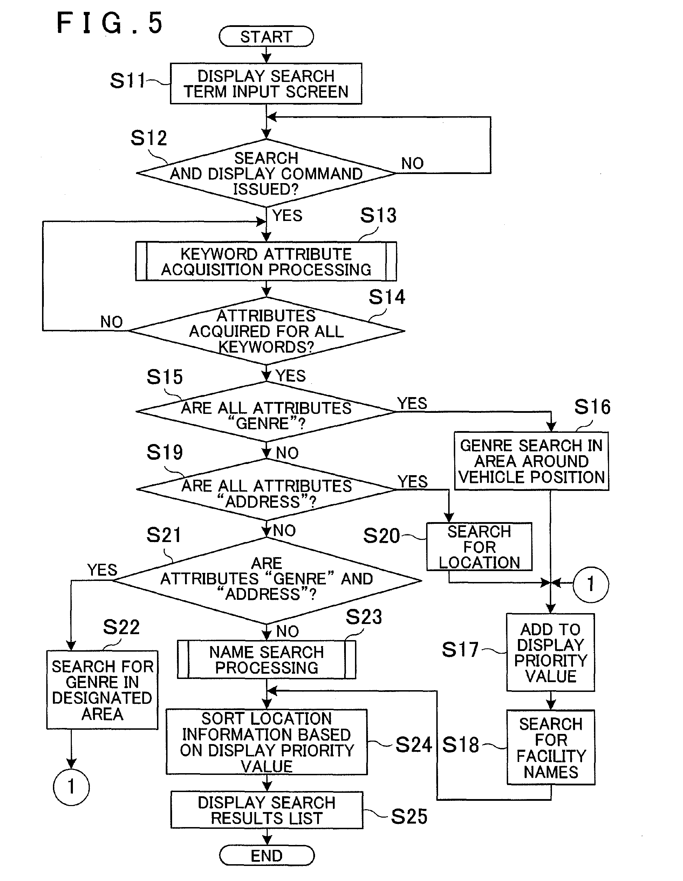

A location information display processing program (refer to FIG. 5) and the like are stored in the ROM 43. The location information display processing program is a program for searching for location information based on the attribute of a keyword included in a search term, that is input through alphanumeric character keys 62, and for displaying the location information, and will be described later. Furthermore, various peripheral devices (actuators), such as the operation portion 14, the liquid crystal display 15, the speaker 16, the communication device 17, and the touch panel 18 are electrically connected to the navigation control portion 13.

The operation portion 14 is operated to correct the current position at the beginning of travel, to input a departure point as a guidance starting point and a destination as a guidance ending point, and to conduct a search for information that pertains to a facility. The operation portion 14 is configured from various types of keys and a plurality of operation switches. The navigation control portion 13 controls the navigation device 1 such that it performs various types of operations, in response to switch signals that are output by, for example, the pressing of the various operation switches, that corresponds to the switch signals.

The liquid crystal display 15 displays map information that includes a location where the vehicle is currently traveling, a search term input screen 61 (refer to FIG. 8) that will be described later, and the search results display screen 71 (refer to FIG. 9), which displays a list of location information that has been found by a search. The liquid crystal display 15 also displays operation guidance, an operation menu, key guidance, a recommended route from the current position to the destination, guidance information along the recommended route, traffic information, news, weather forecasts, the time, e-mail, television programs, and the like.

Based on commands from the navigation control portion 13, the speaker 16 outputs, for example, voice guidance that provides guidance to travel along the recommended route. In the present embodiment, the voice guidance that is output may be, for example, "Turn right at the XX intersection 200 meters ahead."

The communication device 17 is a communication unit that performs communication with the map information distribution center using a mobile telephone network or the like. It performs transmission and receiving of the newest versions of map update information and the like to and from the map information distribution center. In addition to the information from the map information distribution center, the communication device 17 receives traffic information that includes various types of information that are transmitted from the road traffic information center and the like, such as congestion information, the degree of crowding at a service area.

The touch panel 18 is a collection of touch switches that is mounted on the surface of the liquid crystal display 15, and it is configured such that various types of commands can be input by pressing one of a button and a point on a map that are displayed on the screen of the liquid crystal display 15. Note that the touch panel 18 may also be configured in the form of liquid crystal light sensors and the like such that the commands can be input by directly pressing the screen of the liquid crystal display 15.

Next, the genre keyword table 51 that contains the keywords for which the attribute is "genre" will be explained based on FIG. 2. Note that the genre keyword table 51 is contained in the keyword DB 27. As shown in FIG. 2, the keywords that represent the genres, that are stored under "major category" and "intermediate category" in the genre data file 53 and will be described later, are stored in alphabetical order in the genre keyword table 51. Therefore, as will be explained later, if a keyword included in a search term is stored in the genre keyword table 51, it is possible for the CPU 41 to determine that the attribute for the keyword is "genre". In other words, a keyword corresponding to the "genre" attribute is a character string that specifies a genre.

Next, the address keyword table 52 that contains the keywords for which the attribute is "address" will be explained based on FIG. 3. Note that the address keyword table 52 is contained in the keyword DB 27. As shown in FIG. 3, the names of prefectures, cities, towns, and villages are stored in alphabetical order as the keywords in the address keyword table 52. Therefore, as will be explained later, if a keyword included in a search term is stored in the address keyword table 52, it is possible for the CPU 41 to determine that the attribute for the keyword to "address". In other words, a keyword corresponding to the "address" attribute is a character string that indicates a place name specified by a coordinate position (for example, a latitude and a longitude) on a map stored in the navigation map information 26.

Next, the genre data file 53 that stores facility names, which are one of location information, separately by genre in a hierarchical structure with a plurality of levels will be explained based on FIG. 4. Note that the genre data file 53 is contained in the keyword DB 27.

As shown in FIG. 4, the genre data file 53 is configured from major category, intermediate category, and minor category. The major category categorize the genres broadly, into categories such as "sports", "dining", "stores", and the like. The intermediate category are on a lower level than the major category. "Bowling", "billiards", "golf courses", and the like are categorized on the level below "sports", while "fast food", "Japanese cuisine", "western cuisine", and the like are categorized on the level below "dining". Finally, facility names, facility abbreviations, keywords that indicate facilities, and the like, that belong to the respective genres categorized under the intermediate category, are categorized under the minor category.

### Location information display processing

Next, location information display processing that is processing performed by the CPU 41 of the navigation device 1 configured as described above will be explained based on FIGS. 5 to 10. The location information display processing is processing that searches for location information based on the attribute of a keyword included in the search term, that is input through the alphanumeric character keys 62, and that displays a list of the location information that has been found by the search. The navigation device 1 has search functions for performing three types of searches, a genre search, an address search, and a name search. The genre search is a search for searching for location information on locations(facilities) belonging to the genre indicated by the search term. The address search is a search for location information on locations (place names) corresponding to an address indicated by the search term. The name search is a search for location information on locations (facilities) whose name partially matches the search term. The location information is information on locations that are displayed as search results on the search results display screen 71, such as the addresses of the locations, the names of the facilities that are located at the locations, and the like, for example.

FIG. 5 is a flowchart that shows the location information display processing that is performed by the CPU 41. Note that the program that is shown by the flowchart in FIG. 5 is performed by the CPU 41 when a destination setting button of the operation portion 14,that is not shown in the drawings, is pressed.

As shown in FIG. 5, first, at step (hereinafter abbreviated as S) 11, the CPU 41 displays the search term input screen 61 for inputting the search term to search for the location information, on the liquid crystal display 15. An example of the search term input screen 61 will be explained based on FIG. 8. As shown in FIG. 8, the alphanumeric character keys 62, an input character display portion 63, a search term display portion 64, a Modify button 65, a Return button 66, a Next Term button 67, and an End button 68 are displayed on the search term input screen 61.

Input characters that are input through the alphanumeric character keys 62 are displayed in the input character display portion 63. Then, if the Next Term button 67 is pressed, the character string that is being displayed in the input character display portion 63 is set as the search term and displayed in the search term display portion 64, and thereby it is allowed to input another character string. Further, every time the Modify button 65 is pressed, the most recently input character is deleted from the character string that is being displayed in the input character display portion 63.

It is also possible to return to the state prior to the most recent operation by pressing the Return button 66. In addition, by pressing the End button 68, a command is issued to search for the location information with setting the search terms to the character strings displayed in the search term display portions 64, and to display the location information that is found in list form.

Next, at S12, as shown in FIG. 5, the CPU 41 waits for the command to be issued to search for the location information based on the search terms displayed in the search term display portions 64 and to display the location information in list form as destination candidates. In other words, the CPU 41 waits for the End button 68 to be pressed (NO at S12). Next, if the command is issued to search for the location information and to display the location information in list form as destination candidates, that is, if the End button 68 is pressed (YES at S12), the CPU 41 stores the search terms displayed in the search term display portion 64 in the RAM 42, then it proceeds to the processing at S13.

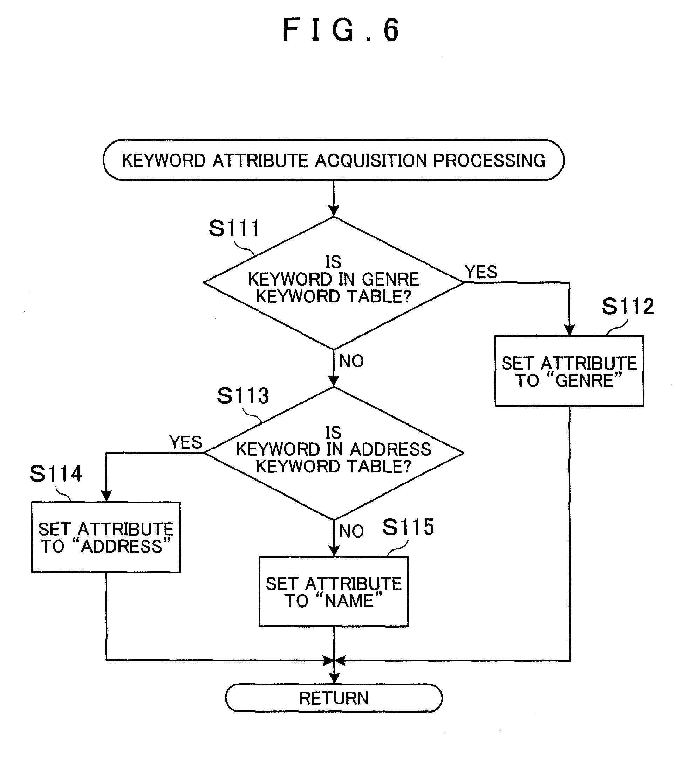

At S13, the CPU 41 performs keyword attribute acquisition processing that is sub-processing to acquire the attributes of the keywords that are included in the search terms. The sub-processing of the keyword attribute acquisition processing will be explained based on FIG. 6. As shown in FIG. 6, at S111, the CPU 41 reads out from the RAM 42 one of the search terms that were stored at S12 above. The CPU 41 then performs determination processing that determines whether or not a part of or all of the character string, that constitutes the search term, is stored as a keyword in the genre keyword table 51.

If a part of or all of the character string that constitutes the search term is stored as a keyword in the genre keyword table 51 (YES at S111), the CPU 41 proceeds to the processing at S112. At S112, the CPU 41 stores "genre" in the RAM 42 as the attribute corresponding to the search term and stores the keyword in the RAM 42 in association with the search term. The CPU 41 then returns to the main flowchart and proceeds to the processing at S14.

On the other hand, if neither a part of or all of the character string that constitutes the search term is stored as a keyword in the genre keyword table 51 (NO at S111), the CPU 41 proceeds to the processing at S113. At S113, the CPU 41 performs determination processing that determines whether or not a part of or all of the character string, that constitutes the search term, is stored as a keyword in the address keyword table 52.

If a part of or all of the character string that constitutes the search term is stored as a keyword in the address keyword table 52 (YES at S113), the CPU 41 proceeds to the processing at S114. At S114, the CPU 41 stores "address" in the RAM 42 as the attribute corresponding to the search term and stores the keyword in the RAM 42 in association with the search term. The CPU 41 then returns to the main flowchart and proceeds to the processing at S14.

On the other hand, if neither a part of or all of the character string that constitutes the search term is not stored as a keyword in the address keyword table 52 (NO at S113), the CPU 41 proceeds to the processing at S115. At S115, the CPU 41 stores "name" in the RAM 42 as the attribute corresponding to the search term. The CPU 41 then returns to the main flowchart and proceeds to the processing at S14.

Next, at S14, as shown in FIG. 5, the CPU 41 performs determination processing that determines whether or not the attributes have been acquired for the keywords that are included in all of the search terms stored in the RAM 42 at S12 above. If it is determined that the attributes have not been acquired for the keywords that are included in all of the search terms (NO at S14), the CPU 41 once again performs the processing at S13 and thereafter.

On the other hand, if it is determined that the attributes have been acquired for the keywords included in all of the search terms (YES at S14), the CPU 41 proceeds to the processing at S15. At S15, the CPU 41 reads out from the RAM 42 the attributes corresponding to the search terms and performs determination processing that determines whether or not the attributes for the keywords included in the search terms are all "genre", that is, whether or not only search terms for which the attribute is "genre" have been input.

If it is determined that the attributes for the keywords that are included in the search terms are all "genre", that is, only search terms for which the attribute is "genre" have been input (YES at S15), the CPU 41 proceeds to the processing at S16. At S16, the CPU 41 performs a genre search corresponding to the search term in the area around the vehicle position. Specifically, the CPU 41 detects the vehicle position (for example, the latitude and the longitude) through the current position detection processing portion 11 and stores it in the RAM 42.

In addition, The CPU 41 reads out from the RAM 42 the keywords that are associated with the search terms and extracts the genres that include the keywords from among the genres stored under the intermediate category in the genre data file 53. The CPU 41 then searches in the navigation map information 26 for the facilities that are indicated by the names or abbreviations, that are stored under the minor category belonging to the extracted genres under the intermediate category, within a predetermined range around the vehicle position (for example, an area within a ten-kilometer radius or an area that is ten kilometers square). The CPU 41 stores location information to be displayed on the search results display screen 71, that is, the name, the address, the display priority value, and the like, for each of the facilities that have been found in the navigation map information 26.

For example, if the keyword is "golf", "golf course", "golf driving range", and "golf equipment store" that are genres stored under the intermediate category are extracted. Further, the facilities indicated by the names or abbreviations that are stored under the minor category belonging to "golf course", "golf driving range", and "golf equipment store" are searched from the navigation map information 26, within the predetermined range around the vehicle position. Then, the name, the address, the display priority value, and the like for each of the facilities, that have been found in the navigation map information 26, are stored in the RAM 42 as location information to be displayed on the search results display screen 71.

If the keyword is "golf course", "golf course" that is a genre under intermediate category is extracted. Further, the facilities that are indicated by the names and abbreviations that are stored under the minor category belonging to the genre "golf course" are searched from the navigation map information 26, within the predetermined range around the vehicle position. The name, the address, the display priority value, and the like for each of the facilities, that have been found in the navigation map information 26, are then stored in the RAM 42 as location information to be displayed on the search results display screen 71.

Next, at S17, the CPU 41 reads out from the RAM 42 the display priority value for each item of the location information that is displayed on the search results display screen 71, adds a predetermined priority value (for example, 10000 or the like) to the display priority value for each item of the location information, and stores again in the RAM 42 the display priority value to which the predetermined priority value has been added. In other words, the CPU 41 sets the display priority value for each item of the location information to a higher value.

Next, at S18, the CPU 41 reads out the search terms from the RAM 42, then searches in the navigation map information 26 for the facility names that includes the search terms (namely, the facility names of which a part or the all matches a character string of the search terms). The CPU 41 then stores the name, the address, the display priority value, and the like for each of the facilities, that have been found in the navigation map information 26, in the RAM 42 as location information to be displayed on the search results display screen 71. The CPU 41 then proceeds to the processing at S24.

On the other hand, if it is determined that the attributes for the keywords included in the search terms are not all "genre", (NO at S15), the CPU 41 proceeds to the processing at S19. At S19, the CPU 41 reads out from the RAM 42 the attributes corresponding to the search terms and performs determination processing that determines whether or not the attributes for the keywords included in the search terms are all "address", that is, whether or not only search terms for which the attribute is "address" have been input.

If it is determined that the attributes for the keywords included in the search terms are all "address", that is, only search terms for which the attribute is "address" have been input (YES at S19), the CPU 41 proceeds to the processing at S20. At S20, the CPU 41 performs a search for the locations corresponding to the search terms. Specifically, the CPU 41 extracts from the navigation map information 26 the place names that are hierarchically subordinate to the place names indicated by the search terms.

The CPU 41 then stores the name, the address, the display priority value, and the like for each of the hierarchically subordinate place names, that have been found in the navigation map information 26, in the RAM 42 as location information to be displayed on the search results display screen 71. Then the CPU 41 performs the processing at S17 and thereafter, as shown in FIG. 5.

In the present embodiment, the place names for cities, towns, and villages are set so as to be subordinate to the place names for prefectures. In other words, a place name included within an area that has a place name indicated by the search term is set so as to be subordinate to the place name indicated by the search term. For example, in a case where the search term is "TOKYO" (Tokyo Metropolis), "SPECIAL WARDS OF TOKYO", "AOGASHIMA" (Aogashima Village), "AKISHIMA" (Akishima City), "AKIRUNO" (Akiruno City), and the like are set to be hierarchically subordinate to "TOKYO". Note that the same also applies to a location search in a country other than Japan. For example, in the case of the United States of America, a location search may be performed with the place names for counties, cities, towns, and villages set so as to be subordinate to the place names for states.

Furthermore, with regard to the display priority values for place names that are hierarchically subordinate to the prefecture names, the highest display priority values are set for the place names where prefectural governments are located and core areas (for example, the special wards of Tokyo and the like), and the display priority values for other place names are set in alphabetical order. The display priority values for the place names that are hierarchically subordinate to the names of cities, towns, and villages are set such that the highest display priority values are set for the place names where city halls, ward offices, town halls, and village halls are located, and the display priority values for other place names are set in alphabetical order.

On the other hand, if it is determined that the attributes for the keywords included in the search terms are not all "address" (NO at S19), the CPU 41 proceeds to the processing at S21. At S21, the CPU 41 reads out from the RAM 42 the attributes corresponding to the search terms and performs determination processing that determines whether or not the attributes for the keywords included in the search terms are "genre" and "address", that is, whether or not only search terms for which the attribute is "genre" and search terms for which the attribute is "address" have been input.

Next, at S21, if it is determined that the attributes for the keywords included in the search terms are "genre" and "address", that is, only search terms for which the attribute is "genre" and search terms for which the attribute is "address" have been input (YES at S21), the CPU 41 proceeds to the processing at S22. At S22, the CPU 41 searches, in the navigation map information 26, for the place name indicated by the search term for which the attributes is "address". Then, the CPU 41 reads out the address of the place name from the navigation map information 26 and stores it in the RAM 42.

Next, the CPU 41 reads out from the RAM 42 the address of the found place name and sets a designated area within a predetermined range around the address of the place name (for example, an area within a ten-kilometer radius or an area that is ten kilometers square). The CPU 41 then performs the genre search corresponding to the search term for which the attribute is "genre" within the designated area. Then the CPU 41 performs the processing at S17 and thereafter, as shown in FIG. 5.

Specifically, the CPU 41 reads out from the RAM 42 the keyword that is associated with the search term for which the attribute is "genre" and extracts the genres that include the keyword from among the genres stored under the intermediate category in the genre data file 53. The CPU 41 then searches in the navigation map information 26 for the facilities indicated by the names or abbreviations stored under the minor category belonging to the extracted intermediate category genres, within the designated area. The CPU 41 then stores the name, the address, the display priority value, and the like for each of the facilities, that have been found in the navigation map information 26, in the RAM 42 as location information to be displayed on the search results display screen 71. Then the CPU 41 performs the processing at S17 and thereafter, as shown in FIG. 5.

Note that at S18, the CPU 41 reads from the RAM 42 the search terms for which the attribute is "genre" and the search terms for which the attribute is "address", then searches in the navigation map information 26 for the facility names that include in the search terms. The CPU 41 then stores the name, the address, the display priority value, and the like for each of the facilities, that have been found in the navigation map information 26, in the RAM 42 as location information to be displayed on the search results display screen 71. The CPU 41 then proceeds to the processing at S24.

On the other hand, if it is determined that the attributes for the keywords included in the search terms include the attribute other than "genre" and "address", that is, search term for which the attribute is "name" have been input (NO at S21), the CPU 41 proceeds to the processing at S23. At S23, the CPU 41 performs name search processing that is sub-processing for performing a name search.

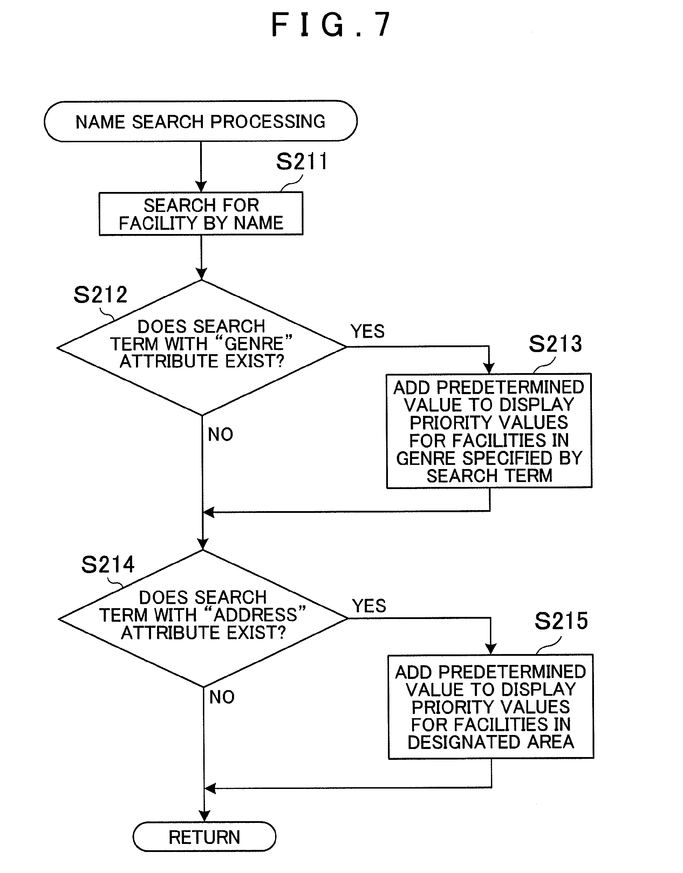

The sub-processing of the name search processing will be explained based on FIG. 7. As shown in FIG. 7, at S211, the CPU 41 reads out from the RAM 42 the search term for which the attribute is "name", then searches in the navigation map information 26 for the facilities that have the facility names that includes the search term. The CPU 41 then stores the name, the address, the display priority value, and the like for each of the facilities, that have been found in the navigation map information 26, in the RAM 42 as location information to be displayed on the search results display screen 71.

Next, at S212, the CPU 41 reads out from the RAM 42 the attributes corresponding to the search terms and performs determination processing that determines whether or not there is a search term for which the attribute is "genre", that is, whether or not a search term for which the attribute is "genre" has been input. If it is determined that there is a search term for which the attribute is "genre", that is, if it is determined that a search term for which the attribute is "genre" has been input (YES at S212), the CPU 41 proceeds to the processing at S213.

At S213, the CPU 41 reads out the keyword that is associated with the search term for which the attribute is "genre" and extracts the genres that include the keyword from among the genres that are stored under the intermediate category in the genre data file 53. Next, the CPU 41 sequentially reads out, from among the respective location information items that were stored in the RAM 42 at S211, the location information items on the facilities whose names or abbreviations are stored under the minor category belonging to the extracted genres under the intermediate category. The CPU 41 then adds a predetermined priority value (for example, 10000 or the like) to the display priority value for each item of the location information, and stores in the RAM 42 the display priority value to which the predetermined priority value has been added. Then the CPU 41 proceeds to the processing at S214. In other words, for those facilities that belong to the genres corresponding to the search term, among the facilities that were found at S211 above, the CPU 41 sets the display priority value to a higher value, then proceeds to the processing at S214.

For example, if the keyword, that is associated with the search term for which the attribute is "genre", is "golf", the CPU 41 extracts, from among the respective location information items that were stored in the RAM 42 at S211, the location information items on the facilities that are indicated by the names or abbreviations that are stored under the minor category belonging to "golf course", "golf driving range", and "golf equipment store" that are stored under the intermediate category. The CPU 41 then adds the predetermined priority value to the display priority value for each of the extracted location information items, and stores in the RAM 42 the display priority value to which the predetermined priority value has been added, and proceeds to the processing at S214.

On the other hand, if it is determined that there is no search term for which the attribute is "genre", that is, if it is determined that a search term for which the attribute is "genre" has not been input (NO at S212), the CPU 41 proceeds to the processing at S214. At S214, the CPU 41 reads out from the RAM 42 the attributes corresponding to the search terms and performs determination processing that determines whether or not there is a search term for which the attribute is "address", that is, whether or not a search term for which the attribute is "address" has been input.

If it is determined that there is a search term for which the attribute is "address", that is, if it is determined that a search term for which the attribute is "address" has been input (YES at S214), the CPU 41 proceeds to the processing at S215. At S215, the CPU 41 searches, in the navigation map information 26 contained in the map information DB 25, for the place name that is indicated by the search term for which the attributes is "address". Then, the CPU 41 reads out the address of the place name and stores it in the RAM 42. Next, the CPU 41 reads out from the RAM 42 the address of the found place name and sets a designated area within a predetermined range around the location of the place name (for example, an area within a ten-kilometer radius or an area that is ten kilometers square).

Next, the CPU 41 reads out the addresses of the respective location information items stored in the RAM 42 at S211 and extracts the location information items that are located in the designated area. The CPU 41 then adds a predetermined priority value (for example, 10000 or the like) to the display priority value for each of the extracted location information items, and stores in the RAM 42 the display priority value to which the predetermined priority value has been added. Then the CPU 41 returns to the main flowchart and proceeds to the processing at S24. In other words, for those facilities that are located in the designated area, among the facilities that were found at S211 above, the CPU 41 sets the display priority value to a higher value, then returns to the main flowchart and proceeds to the processing at S24.

On the other hand, if it is determined that a search term does not exist for which the attribute is "address", that is, if it is determined that a search term for which the attribute is "address" has not been input (NO at S214), the CPU 41 returns to the main flowchart and proceeds to the processing at S24.

As shown in FIG. 5, at S24, the CPU 41 reads out from the RAM 42 the location information to be displayed on the search results display screen 71, sorts the location information items in descending order of the display priority values, and stores the location information items once again in the RAM 42. Next, at S25, the CPU 41 displays in list form the location information items that have been sorted in descending order of the display priority values and terminates the processing. Note that on the liquid crystal display 15, a predetermined number of the location information items, such as five, are displayed at a time in the sorted order (refer to FIG. 9).

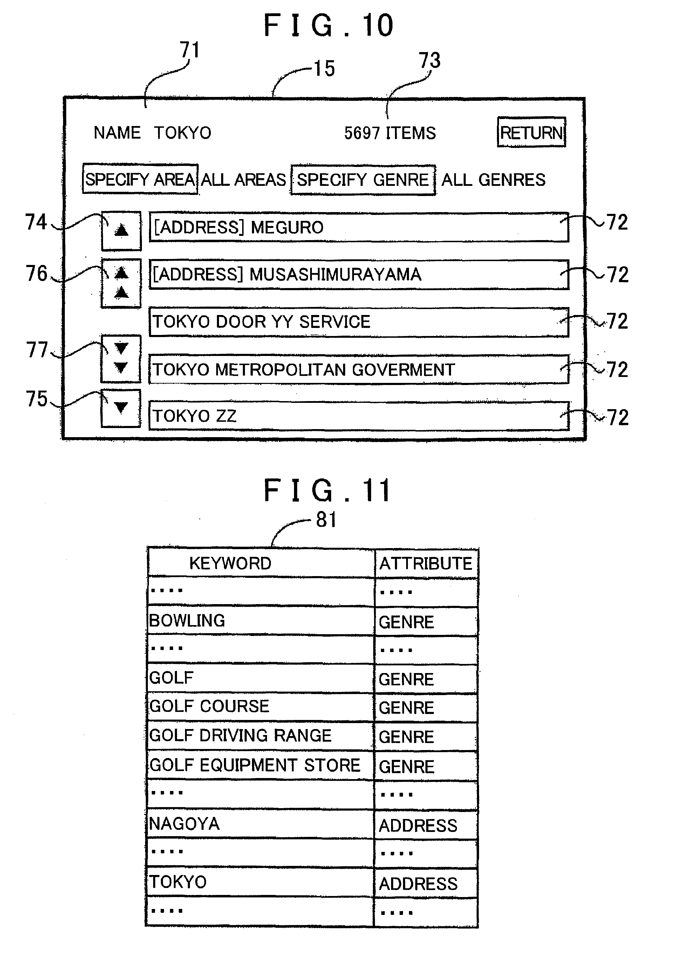

An example of the display of the search results list will be explained based on FIGS. 9 and 10. In this example, the search term "TOKYO" has been input on the search term input screen 61, as shown in FIG. 8, and the End button 68 has been pressed. First, if the input search term is only "TOKYO", which is stored in the address keyword table 52 (YES at S19), the CPU 41 performs the processing at S20 above, then proceeds to the processing at S17 and thereafter.

Accordingly, the CPU 41 extracts the place names that are hierarchically subordinate to the place name "TOKYO", such as "SPECIAL WARDS OF TOKYO", "AOGASHIMA", "AKISHIMA", and "AKIRUNO", and then stores the name, the address, the display priority value, and the like for each of the place names in the RAM 42 as location information to be displayed on the search results display screen 71 (S20). Then, the CPU 41 reads out the display priority value for each of the place names, adds a predetermined value (for example, 10000 or the like) to it, and stores in the RAM 42 the display priority value to which the specified priority value has been added (S17).

The CPU 41 also reads out the search term "TOKYO" from the RAM 42 and searches in the navigation map information 26 for the facility names that begin with the character string "TOKYO" (for example, "TOKYO DOOR YY SERVICE", "TOKYO ZZ", "TOKYO METROPOLITAN GOVERMENT", and the like). The CPU 41 then stores in the RAM 42, as location information to be displayed on the search results display screen 71, the name, the address, the display priority value, and the like for each of the facilities that have been found in the navigation map information 26 (S18). Next, the CPU 41 reads out from the RAM 42 the location information to be displayed on the search results display screen 71, sorts the location information items in descending order of the display priority values, and stores the location information items once again in the RAM 42 (S24).

Next, as shown in FIG. 9, the CPU 41 displays the search results display screen 71 on the liquid crystal display 15. the CPU 41 extracts the place names of the five location information items with the highest display priority values, that is, "[Address] SPECIAL WARDS OF TOKYO", "[Address] AOGASHIMA", "[Address] AKISHIMA", "[Address] AKIRUNO", and "[Address] ADACHI" and displays them in order in five search results display spaces 72.

If the user selects one of the location information items in the search results display spaces 72 for which the attribute is "address", by pressing on the location information item, the CPU 41 displays a map corresponding to the selected location information item on the liquid crystal display 15. Further, if the user selects one of the location information items in the search results display spaces 72 by pressing on the location information item (the name of the facility), the CPU 41 sets the selected facility as the destination, performs a route search, and displays a recommended route on the map.

In addition, in the upper portion part of the search results display screen 71, a number of items display portion 73 is provided in which the number of items that are found by the search is displayed. To the left of the search results display spaces 72, a previous button 74 and a next button 75, that respectively scrolls down and scrolls up the displays of the place names or the facility names in the search results display spaces 72, one item at a time, are displayed. In addition, a previous page button 76 and a next page button 77, that respectively scrolls down and scrolls up the displays of the place names or the facility names in the search results display spaces 72, five items at a time, are displayed.

As shown in FIG. 10, if the next page button 77 that scrolls the display up five items at a time has been pressed several times, and thereby all of the place names within the Tokyo Metropolis sorted in alphabetical order have been displayed in the search results display spaces 72, the CPU 41 then reads out from the RAM 42, in order according to the display priority value, the facility names that begin with the character string "TOKYO", and displays the facility names in order in the search results display spaces 72.

It is thus possible for the user, by inputting only the character string "TOKYO" as the search term, to select the place name, that is one of a city, a ward, a town, and a village within the Tokyo Metropolis, and to display on the liquid crystal display 15 a map corresponding to the selected place name. Further, it is possible to set a destination and display a recommended route to the destination on the map. The user can also select a facility name that begins with the character string "TOKYO" and display a recommended route to the facility on the map.

As has been explained in detail above, in the navigation device 1 according to the present embodiment, if a keyword (a part of or all of a character string that constitutes a search term) that is included in the search term input on the search term input screen 61 is stored in the genre keyword table 51, the CPU 41 sets the attribute for the search term to "genre", and if the keyword is stored in the address keyword table 52, the CPU 41 sets the attribute for the search term to "address". Furthermore, if the keyword is not stored in either the genre keyword table 51 or the address keyword table 52, the CPU 41 sets the attribute for the search term to "name" (S11 to S14).

This makes it possible to reduce the storage capacity of the data storage portion 12, because the keywords only need to be stored in one of the genre keyword table 51 and the address keyword table 52, in association with the corresponding one of the genre attribute and the location attribute.

The CPU 41 also performs control such that the location information, that is found in a search, is displayed in the form of a list for each of the search functions (the genre search, the location search, and the name search) that is used for the search (S25). This makes it possible for the user to easily select and view search results by the desired search function.

Furthermore, if the attributes for the search terms that are input on the search term input screen 61 are all "genre", The CPU 41 performs the search (the genre search) in the navigation map information 26 for location information on locations belonging to genre that is indicated by the search term, within a predetermined range around the vehicle position. The CPU 41 also performs a search in the navigation map information 26 for location information on facilities whose name partially match the search term. The CPU 41 then performs control such that the location information is displayed with priority given to the location information on the location belonging to the genre that is indicated by the search term, over the location information on the facility names that partially match the search term (YES at S15 to S18; S24 to S25).

This makes it possible for the user, by inputting only the search term that indicates the genre, to select the desired facility as the destination with reference to not only the list of the location information on the locations belonging to the genre that is indicated by the input search term, in the area around the vehicle position, but also the list of the facilities whose names partially match the search term.

Moreover, if the attributes for the search terms that are input on the search term input screen 61 are all "address", The CPU 41 performs the search (the address search) in the navigation map information 26 for the place names that are hierarchically subordinate to the place name indicated by the search term. For example, if the search term is a prefecture name, the CPU 41 searches for the names of the counties, the cities, the towns, the villages, and the like within the prefecture corresponding to the prefecture name. The CPU 41 also performs a search in the navigation map information 26 for location information on facilities whose name partially match the search term. The CPU 41 then performs control such that the location information is displayed with priority given to the place names that are hierarchically subordinate to the place name indicated by the search term, over the location information on the facility names that partially match the search term (NO at S15, YES at S19, S20, S17 to S18, S24 to S25).

This makes it possible for the user to display a map on which the desired destination locates or to select the desired facility as the destination, with reference to not only the list of the place names that are hierarchically subordinate to the place name indicated by the input search term, but also the list of the facilities whose names partially match the search term, and to select the desired facility as the destination with reference to those lists.

Furthermore, if the attributes for the keywords included in the search terms are "genre" and "address", the search (the genre search) is performed for the location information on the locations that belong to the genre indicated by the search term for which the attribute is "genre", within the area indicated by the search term for which the attribute is "address". The CPU 41 also performs the search in the navigation map information 26 for the location information on the facilities whose names partially match the search term for which the attribute is "genre" and on the facilities whose names partially match the search term for which the attribute is "address" respectively. The CPU 41 then performs control such that respective location information is displayed (NO at S19, YES at S21, S22, S17 to S18, S24 to S25).

This makes it possible for the user, by inputting the search term that specifies the genre and the search term that indicates the area, to display the location information on the locations corresponding to the specified genre within the specified area. In addition, this makes it possible for the user to select the desired facility as the destination, with reference to not only the list of the facilities corresponding to the specified genre within the desired area, but also the list of the facilities whose names partially match the search terms.

Furthermore, if not only search terms for which the attributes are "genre" and "address", but also a search term for which the attribute is "name" are input, the CPU 41 searches in the navigation map information 26 for the facilities whose names include (partially match) the search term for which the attribute is "name". The CPU 41 then stores in the RAM 42 the name, the address, the display priority value, and the like for each of the facilities that has been found, as location information to be displayed on the search results display screen 71. In addition, for the facilities, among the facilities that are found, that belong to the genre indicated by the search term for which the attribute is "genre", the CPU 41 adds the predetermined value to the display priority value. The CPU 41 also sets the designated area within the predetermined range around the place whose name is indicated by the search term for which the attribute is "address", then adds the predetermined value to the display priority values for the facilities, among the facilities that are found, that are located within the designated area (NO at S21 to S25).

This makes it possible for the user, by inputting the genre and a portion of the facility name as the search terms, to display the facility names with a priority given to the names of the facilities that belong to the desired genre over the names of the facilities that belong to the other genre. In addition, This make it possible for the user, by inputting a place name that designates an area and a portion of the name of a facility as the search terms, to display the facility names with a priority given to the names of the facilities in the desired area over the names of the facilities in a different area.

Note that the present invention is not limited to the embodiment that is described above, and it is obvious that various types of improvements and modifications can be made to the present invention within the scope of the claims.

For example, a keyword table 81 that is shown in FIG. 11 may be stored in the keyword DB 27 instead of the genre keyword table 51 and the address keyword table 52. The keyword table 81 will be explained based on FIG. 11.

As shown in FIG. 11, the keyword table 81 is configured from keywords and attributes. The keywords, which are stored in alphabetical order, include keywords that indicate the genres that are stored in the genre data file 53 under the major category and the intermediate category, and also include the place names of the prefectures, cities, towns, and villages that are stored in the navigation map information 26. In addition, "genre" is stored as the attribute for each of the keywords that indicate the genres, and "address" is stored as the attribute for each of the keywords that indicate the place names of the prefectures, cities, towns, and villages.

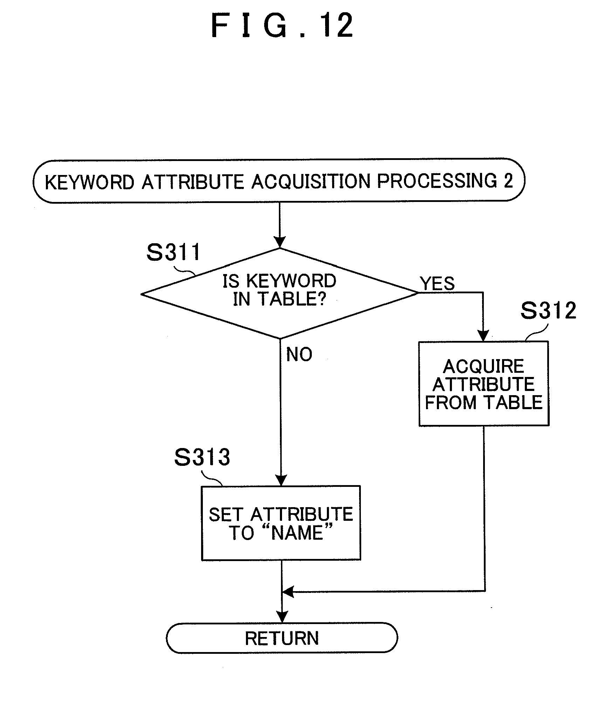

The CPU 41 may also perform sub-processing of keyword attribute acquisition processing 2 shown in FIG. 12, instead of the sub-processing of the keyword attribute acquisition processing described above. The keyword attribute acquisition processing 2 will be explained based on FIG. 12.

As shown in FIG. 12, at S311, the CPU 41 reads out one of the search terms that were stored in the RAM 42 at S12 above. The CPU 41 then performs determination processing that determines whether or not a part of or all of the character string that constitutes the search term is stored as a keyword in the keyword table 81.

If a part of or all of the character string that constitutes the search term is stored as a keyword in the keyword table 81 (YES at S311), the CPU 41 proceeds to the processing at S312. At S312, the CPU 41 reads out one of "genre" and "address" as the attribute corresponding to the keyword, stores in the RAM 42 the attribute that corresponding to the search term, and stores the keyword in the RAM 42 in association with the search term. Then the CPU 41 returns to the main flowchart and proceeds to the processing at S14.

On the other hand, if neither a part of or all of the character string that constitutes the search term is stored as a keyword in the keyword table 81 (NO at S311), the CPU 41 proceeds to the processing at S313. At S313, the CPU 41 stores "name" in the RAM 42 as the attribute corresponding to the search term, then returns to the main flowchart and proceeds to the processing at S14. This makes it possible to reduce the storage capacity of the data storage portion 12, because the keywords only need to be stored in the keyword table 81, in association with the corresponding one of the genre attribute and the location attribute.
A location search device including: an input portion that inputs a search term; a storage portion that stores keywords and attributes in association with one another; an attribute acquisition portion that acquires an attribute of an input keyword that is a part of or all of a character string that constitutes an input search term that is the search term input by the input portion, from the storage portion; a search function setting portion that selects a first search function for searching for location information on a location corresponding to the input search term, from among a plurality of search functions, based on the attribute of the input keyword; a search portion that searches for the location information on the location corresponding to the input search term, using the first search function; and a display control portion that performs control such that the location information is displayed.

## Claims

1. A location search device, comprising:
an input portion that inputs a search term;
a storage portion that stores keywords and attributes of the keywords in association with one another;
an attribute acquisition portion that acquires an attribute of an input keyword that is a part of or all of a character string that constitutes an input search term that is the search term input by the input portion, from the storage portion;
a search function setting portion that selects a first search function for searching for location information on a location corresponding to the input search term, from among a plurality of search functions for searching for location information, based on the attribute of the input keyword;
a search portion that searches for the location information on the location corresponding to the input search term, using the first search function; and
a display control portion that performs control such that the location information is displayed.

2. The location search device according to claim 1, wherein
the display control portion performs control such that the location information is displayed in the form of a list for each of the search functions that the search portion uses.

3. The location search device according to claim 1, wherein
the storage portion stores the keywords in association with an attribute that is one of genre attribute and a location attribute;
if the keyword that matches the input keyword is stored in the storage portion, the attribute acquisition portion sets the attribute of the input keyword to the attribute that is associated with the keyword that matches the input keyword; and
if the keyword that matches the input keyword is not stored in the storage portion, the attribute acquisition portion sets the attribute of the input keyword to a name attribute.

4. The location search device according to claim 1, wherein
the plurality of the search functions include a genre search function for searching for the location information on the location belonging to a genre indicated by the search term, an address search function for searching for location information on the location corresponding to an address indicated by the search term, and a name search function for searching for location information on the location whose name partially matches the search term.

5. The location search device according to claim 1, further comprising:
a current position acquisition portion that acquires a current position, wherein
if the attribute of the input keyword is a genre attribute,
the search function setting portion sets the first search function to a genre search function for searching for the location information on the location that belongs to a genre indicated by the search term;
the search portion searches for genre location information that is location information on a location that belongs to a genre indicated by the input search term, using the genre search function, in an area around the current position, and the search portion searches for name location information that is location information on a location whose name partially matches the input search term; and
the display control portion performs control such that the location information is displayed with priority given to the genre location information over the name location information.

6. The location search device according to claim 1, wherein
if the attribute of the input keyword is an address attribute,
the search function setting portion sets the first search function to an address search function for searching for location information on a location corresponding to an address indicated by the search term;
the search portion searches for address location information that is location information on a location within an area indicated by the input search term, using the address search function, and the search portion searches for name location information that is location information on a location whose name partially matches the input search term; and
the display control portion performs control such that the location information is displayed with priority given to the address location information over the name location information.

7. The location search device according to claim 1, wherein
if a plurality of the attributes of the input keywords are a genre attribute and a name attribute,
the search function setting portion sets the first search function to a name search function for searching for location information on a location whose name partially matches the search term;
the search portion searches for location information whose name partially matches an input search term whose input keyword has the name attribute, using the name search function; and
the display control portion performs control such that the location information is displayed with priority given to the location information on a location belonging to a genre indicated by an input search term whose input keyword has the genre attribute, over the other location information.

8. The location search device according to claim 1, wherein
if a plurality of the attributes of the input keywords are an address attribute and a name attribute,
the search function setting portion sets the first search function to a name search function for searching for location information on a location whose name partially matches the search term;
the search portion searches for location information whose name partially matches an input search term whose input keyword has the name attribute, using the name search function; and
the display control portion performs control such that the location information is displayed with priority given to the location information within an area indicated by an input search term whose input keyword has the address attribute, over the other location information.

9. The location search device according to claim 1, wherein
if the attributes of the input keywords are an address attribute and a name attribute,
the search function setting portion sets the first search function to a genre search function that searches for location information on a location belonging to a genre indicated by the search term, and
the search portion searches for location information on a location belonging to a genre indicated by an input search term whose input keyword has the genre attribute, using the genre search function, within an area specified by an search term whose input keyword has the address attribute.

10. A location search method, comprising:
inputting a search term;
acquiring an attribute of an input keyword that is a part of or all of a character string that constitutes an input search term that is the search term input, from the storage portion, from a storage portion that stores keywords and attributes of the keywords in association with one another;
selecting a first search function for searching for location information on a location corresponding to the input search term, from among a plurality of search functions for searching for location information, based on the attribute of the input keyword;
searching for the location information on the location corresponding to the input search term, using the first search function; and
performing control such that the location information is displayed.

11. A computer-readable medium that stores a computer-executable location search program that causes a computer to perform the location search method according to claim 10.
